(19) Europäisches Patentamt
European Patent Office
Office européen des brevets

(11) EP 2 498 497 A1

(12) EUROPEAN PATENT APPLICATION

(43) Date of publication:
12.09.2012 Bulletin 2012/37

(51) Int Cl.:
H04N 7/26 (2006.01)

(21) Application number: 12158956.8

(22) Date of filing: 09.03.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.03.2011 US 201161452081 P
11.03.2011 US 201161452078 P

(71) Applicant: Research In Motion Limited
Waterloo, ON N2L 3W8 (CA)

(72) Inventors:
• Korodi, Gergely Ferenc
Waterloo, Ontario N2L 3W8 (CA)
• He, Dake
Waterloo, Ontario N2L 3W8 (CA)

(74) Representative: Finnie, Peter John
Gill Jennings & Every LLP
The Broadgate Tower
20 Primrose Street
London EC2A 2ES (GB)

(54) **Method and system using prediction and error correction for the compact representation of quantization matrices in video compression**

(57) In some implementations, a method for encoding data comprising a matrix of elements for scaling transform coefficients before quantization of the scaled transform coefficients includes generating a sequence of values from the elements of the matrix according to a predetermined order. A plurality of adjacent values in the sequence is generated from respective elements of the matrix. A representation of the data is encoded based at least in part on encoding repeated instances of a specified series of two or more values in the sequence as a corresponding symbol not appearing in the sequence.

FIG. 5A

500

502
generating a sequence of values from the elements of the matrix according to a predetermined order, wherein a plurality of adjacent values in the sequence are generated from respective elements of the matrix

504
encoding a representation of the data based at least in part on encoding repeated instances of a specified series of two or more values in the sequence as a corresponding symbol not appearing in the sequence

EP 2 498 497 A1

**Description**

**CLAIM OF PRIORITY**

This application claims priority under 35 U.S.C. § 119(e) to both U.S. Provisional Patent Application Serial No. 61/452,078 and 61/452,081, both filed on March 11, 2011.

**TECHNICAL FIELD**

This disclosure relates to video compression and, more particularly, to a method and system using prediction and error correction for the compact representation of quantization matrices in video compression.

**BACKGROUND**

The video compression standard H.264/AVC (Advanced Video Coding) allows compressed quantization matrices to be carried in the picture parameter set of the video stream, but only up to 8x8 matrices. The next generation High Efficiency Video Coding (HEVC) standard uses transform sizes up to 32x32, but the quantization matrix compression algorithm for AVC has relatively low performance at those large sizes, especially for low-bitrate applications.

**DESCRIPTION OF DRAWINGS**

FIG. 1A is a block diagram of an exemplary communication system.

FIG. 1B is a schematic diagram illustrating matrix elements to be compressed.

FIG. 2A is a block diagram of an exemplary encoder apparatus.

FIG. 2B is a block diagram of an exemplary decoder apparatus.

FIG. 3 is a block diagram of an adaptive quantizer module.

FIGS. 4A-B are flow charts illustrating example methods for encoding and decoding data, respectively.

FIGS. 5A-B are flow charts illustrating another example methods for encoding and decoding data, respectively.

**DETAILED DESCRIPTION**

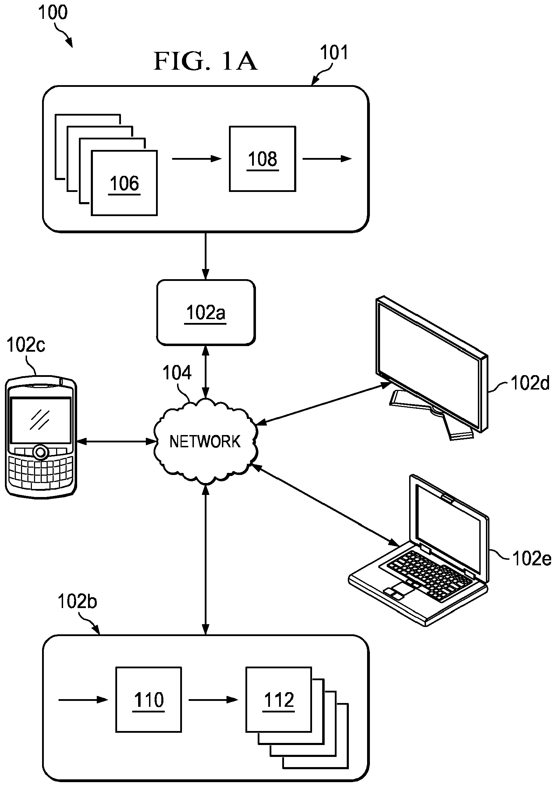

The present disclosure proposes one or more transforms configured to provide for efficient lossless compression of large quantization matrices. In some implementations, these transforms may apply to any video format where large or not so large quantization matrices are used such as, for example, HEVC, Variation of H264/AVC, 3D or multiview video formats, scalable video format and/or others.
The techniques described herein can be applied to video data, for example, including data that is compressed for communication or storage and decompressed by any of a variety of devices. FIG. 1A shows an exemplary system 100 for communicating data, including video, or other media data, between one or more nodes 101, 102a-102e connected over a network 104. In this example, a node 101 receives a sequence of frames 106 from one or more sources (not shown) such as a video camera or a video stored in a storage medium, or any other source that can detect, derive, capture, store or record visual information such as video or images. In some implementations, the sources may be in communication with the node 101, or may be a part of the node 101. The node 101 includes an encoder module 108 that encodes the frames 106 to generate a stream or file of encoded video data. The node 101 can be configured to encode matrices using the techniques described herein, which can be included in the stream or file, for use when the encoded video data is being decoded. In this example, the encoded video data is provided to a node 102a coupled to the network 104. Alternatively, the node 101 may itself be coupled to the network 104, or the encoded video data may also or alternatively be stored locally for later transmission or output, such as in a non-volatile memory or other storage medium.
The node 102a transmits the encoded video data (e.g., as a stream or a file) to any of a variety of other nodes 102b-102e (e.g., a mobile device, a television, a computer, etc.) coupled to the network 104. The node 102a can include a transmitter configured to optionally perform additional encoding (e.g., channel coding such as forward error-correction coding) and to modulate the data onto signals to be transmitted over the network 104. The node 102b receives and demodulates the signals from the network 104 to recover the encoded video data. The node 102b includes a decoder module 110 that decodes the encoded video data and generates a sequence of reconstructed frames 112. The reconstruction process may include decoding encoded matrices (e.g. quantization matrices) transmitted with the encoded video data. In some implementations, the node 102b may include a display for rendering the reconstructed frames 112. The node 102b may include a storage medium to store the encoded video data for later decoding including at a time when the node 102b is not coupled to the network 104.

The network 104 may include any number of networks interconnected with each other. The network 104 may include any type and/or form of network(s) including any of the following: a wide area network (such as the Internet), a local area network, a telecommunications network, a data communication network, a computer network, a wireless network, a wireline network, a point-to-point network, and a broadcast network. The network may include any number of repeaters, appliances, devices, servers, storage media and queues.

In the description that follows, example embodiments of the matrix encoding/decoding techniques are described with reference to two-dimensional video coding/decoding, however, the filtering techniques may also be applicable to video coding/decoding that includes additional views or dimensions, including multiview video coding (MVC) and three-dimensional (3D) video, or extensions of video coding/decoding schemes such as scalable video coding (SVC).

Some implementations include encoding/decoding data that includes a quantization matrix. In one implementation, several transforms may be provided for the quantization matrix. The transforms may be applied in sequence. For example, transforms may include a 135-degree transform that transforms the quantization matrix into a lower-diagonal matrix, plus occasional error residuals. A special transform may be used along the 45-degree semidiagonals to model these diagonals as rounded values of arithmetic progressions, plus occasional error residuals. Each arithmetic progression may be described by one integer and two values from separate, low-order sets. Another transform may encode the integer and set values into a compact representation. This transform may use an order-2 differential coding, on the integer values, plus other symmetrical properties that stem from design of the quantization matrix. The error residuals of the previous three steps, if any, may be encoded by an algorithm that recursively divides the matrix into four quadrants, applying this division to the resulting submatrices until there is either only one cell in the submatrix, or all cells are zeroes.

The compression process may be applied to Q, an nxn matrix, where n is a power of 2, n >= 4. The transforms described below may provide a compact representation for the matrix Q, from which the original can be uniquely reconstructed at low computational complexity.

Assume that Q is a quantization matrix for Discrete Cosine Transform (DCT) - coefficients used in video coding. In this case, each element in Q may be an 8-bit unsigned integer, corresponding to the values $q_{ij}$ in { 0, ..., 255 } (1 <= i, j <= n). Furthermore, the algorithm may exhibit certain properties useful to derive a compact representation. In some implementations, the described algorithm may use some of the properties commonly present in quantization matrices but the described algorithm may also work for any matrix. For example, the algorithm may work for any matrix given above, the compact representation is usually achieved when n=8, 16, 32 or higher.

Further note that in video coding, the matrix Q may be either interpreted as a multiplication representation or as a Delta QP representation. In a multiplication representation, which is used in Moving Picture Experts Group 2 (MPEG-2) and H.264|AVC, each entry $q_{ij}$ may be a multiplication to QP (quantization parameter). For example, in H.264|AVC for quantization of 4x4 blocks, $q_{ij}$ is multiplied by a quantity called normAdjust4x4(m, i, j), where m = QP%6 in the quantization process. The "%" refers to the modulo operator and limits the values of QP from zero to five. In a Delta QP representation, $q_{ij}$ may be added to the default quantization matrix derived from QP.

In some implementations, the described algorithm may apply various transforms to the matrix. These transforms, if deemed applicable, may change the shape of the elements to be coded and subsequently the coding algorithm. We list the transforms and the corresponding coding methods below.

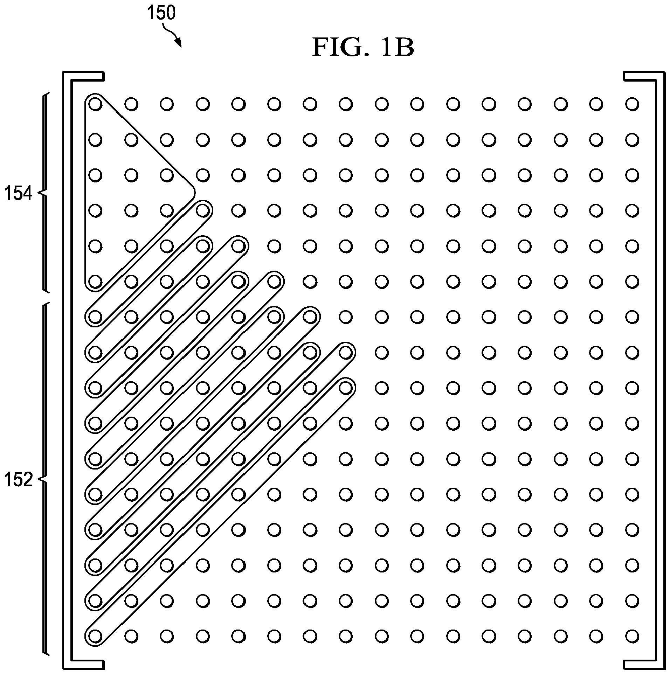

In simple terms, the algorithm may consist of three parts: (1) classification of the matrix; (2) curve fitting and coding; and (3) residual coding. Part (1) is optional. First the algorithm (as performed by the encoder) checks if the quantization matrix is symmetrical to the main diagonal (135°). If the outlying elements have substantially low magnitude, the matrix may be regarded as symmetrical. Next, the algorithm may determine if mirroring elements to the anti-diagonal (45°) sum up to a constant value (inverse symmetry). Based on the symmetries found in Q, it may be classified as one of three classes: (1) Class 1 has no symmetry and the whole matrix is processed (2) Class 2 has 135° symmetry but no 45° symmetry and the lower triangle is processed; and (3) Class 3 has both 135° and 45° symmetries and only the elements below the main diagonal and above the anti-diagonal are processed. For example, FIG. 1B shows a matrix 150 of Class 3 that is to be encoded. Ten subsets of the elements 152 have been identified for compression using the techniques described herein. Each subset includes a sequence of elements parallel to a specified diagonal of the matrix (in this example, the main anti-diagonal). For each sequence, the encoder determines one or more parameters of a respective curve that approximates that sequence. In some implementations, the parameters of one curve based on a descriptive cost associated with that curve, reducing a descriptive cost associated with that curve, and/or minimizing a descriptive cost associated with the respective curve. A representation of the matrix is encoded based at least in part on the parameters of the curves. For a remaining set of elements 154, the elements do not need to be compressed because there would be too few elements in the remaining sequences to achieve significant compression by encoding the sequence.

Once the symmetrical constraints, if detected in Part (1), are substantially eliminated, the algorithm may enter part (2), i.e., working on the semi-diagonals, which may be defined as a sequence of values (entries of the matrix) parallel to a specified common diagonal, such as the anti-diagonal in the examples below. In addition, this sequence of values may be any length relative to the specified diagonal such as a fourth, three fourths, a half, an eight, five eights, and/or any other fraction of the specified diagonal. In general, the term diagonal may refer to a semi-diagonal, a major diagonal, an anti-diagonal, and/or other diagonals in a matrix whether fully or partially spanning between sides of a matrix. Based on the class of the matrix, these semi-diagonals may be modeled by a quadratic (Class 1) or a linear (Classes 2 and 3) expression or both. That is, parameters of a quadratic or linear curve may be determined by approximating the values along each semi-diagonal, and the descriptions of these curves (e.g. the best-fitting curves) may be encoded. Since a quadratic function may be specified with three parameters and the linear function only with two, encoding these functions may take significantly less space for large matrices as compared with encoding the corresponding semi-diagonals, whose lengths on average are proportional to the matrix size. However, the fitting of the curves may not allow for a lossless reconstruction of the semi-diagonal values. In case such a loss is not permissible by the application, part (3) may include an efficient residual-coding mechanism to correct the non-matching values.

In the following description, the algorithm uses the concept "$i^{th}$ semi-diagonal." The $i^{th}$ semi-diagonal is a subset of elements $q_{i-k+1,k}$ of the matrix, where i is a fixed index from 1 to 2n-1, and k is a running index from 1 to i if i <=n, and from i-n+1 to n otherwise. Accordingly, the "$i^{th}$ half semi-diagonal" may be defined such that k is a running index from 1 to i/2 if $i \Leftarrow n$, and from i-n+1 to i/2 + 1 otherwise. Conceptually, a semi-diagonal may be a 45° line starting from the left edge or bottom edge of the matrix Q, and going to the other edge; the half semi-diagonal may stop at the main diagonal of Q. The starting element of semi-diagonal i, i=1, ..., 2n-1 may be called the base of that semi-diagonal and may be denoted by B(i). That is, B(i) = $q_{i,1}$ if $i \Leftarrow n$ and B(i) = $q_{n,i-n+1}$ if i > n.

In some implementations, the matrix may have any suitable classification. For example, for each i, j = 1, ..., n, set $q_{ij}$ = ($q_{ij}$ + $q_{ji}$) / 2 if i <= j, and $q_{ij}$ = ($q_{ij}$ - $q_{ji}$) / 2 otherwise the following expression may be evaluated:

$$S_1 = (\textstyle\sum_{j>i} |q_{ij}|) / (n*n).$$

If $S_1$ is greater than a given constant $T_1$, Q may not satisfy the 135° constraint and belong to Class 1. The encoder may write "0" to the output and proceed to the coding process described with respect to Class 1 defined below.

If Q satisfies the 135° symmetry, Q may be reduced to a lower triangle matrix and, subsequently, the algorithm may work on half semi-diagonals. To continue the classification process, the encoder may compute the sum using the following expression:

$$R = (\textstyle\sum_{i<=j} q_{ij}) / ((n*n + n)/2),$$

where the $q_{ij}$ values may run through each half semi-diagonal. Then the following expression may be evaluated:

$$S_2 = (\textstyle\sum_{i+j<=n} |q_{ij} + q_{n-j+1,n-i+1} - R|) / ((n*n + n)/2),$$

where this time the i index may run through 1 to n and the j index may run through the $i^{th}$ half semi-diagonal.

If $S_2$ is greater than a given constant $T_2$, Q may not satisfy the 45° constraint and belong to Class 2. The encoder may write "10" to the output and proceed to the coding process described with respect to Class 2 defined below.

If $S_2$ <= $T_2$, then Q may belong to Class 3. The encoder may write "11" to the output followed by R and proceed to the coding process described with respect to Class 3 defined below.

In some implementations, curve fitting and coding may include any suitable Class 1, Class 2, and/or Class 3 defined below. In Class 1, this coding part may fit quadratic curves to the semi-diagonals i=4, ..., 2n-4. The outlying semi-diagonals (1, 2, 3, 2n-3, 2n-2, 2n-1) may be short and encoded using exponential Golomb codes.

Encoding the rest of Q in this case may use two discrete sets $C_1$ and $D_1$, known to both the encoder and decoder. The size of these sets may be a power of 2. The algorithm may process each semi-diagonal i = 4, ..., 2n-4 independently. For the $i^{th}$ semi-diagonal, evaluate the following expression may be evaluated:

$$\arg \min_{b_{i0},b_{i1},b_{i2},x_i} \sum_k \left(q_{i-k+1,k} - (b_{i2}k^2 + b_{i1}k + b_{i0} + x_i)\right)^2,$$

where the numbers $b_{i0}$, $b_{i1}$, $b_{i2}$ may run through all elements of $D_1$, $x_i$ may run through $C_1$, k may run through the indices of the semi-diagonal. Finally, for each semi-diagonal i, the encoder may write $b_{i0}$, $b_{i1}$, $b_{i2}$ and $x_i$ in the output, using $\log_2|D_1|$, $\log_2|D_1|$, $\log_2|D_1|$ and $\log_2|C_1|$ bits, respectively. After this processes, the algorithm may proceed to the planar residual encoding phase described in detail below.

In Class 2, this coding part may fit linear functions to the semi-diagonals i=5, ..., 2n-5. The other semi-diagonals (1, 2, 3, 4, 2n-4, 2n-3, 2n-2, 2n-1) may be output element-wise using exponential Golomb codes. The rest may be processed as follows.

The first part of this process may evaluate which half semi-diagonals follow overwhelmingly increasing or decreasing tendencies. For the $i^{th}$ semi-diagonal (i=5, ..., 2n-5), the follow expression may be evaluated:

$$s_i = \sum_k \chi(q_{i-k+1,k} <= q_{i-k,k+1}),$$

where the $\chi$ function may take the value 1 if the condition is satisfied and 0 otherwise. Next, set $\sigma_i = \chi(s_i > i/2-1)$ for odd i values, and $\sigma_i = \chi(s_i <= i/2-1)$ for even i values. The result of this computation may be a bit sequence $\sigma_i$, i=5, ..., 2n-5 which may indicate the half semi-diagonals that decrease ($\sigma_i = 0$) or increase ($\sigma_i = 1$) for odd i values, and, for even i values, this representation may be the opposite. Therefore, if the signs of the difference alternate between neighboring semi-diagonals, the $\sigma_i$ sequence may be all 0. This sequence is encoded with the linear residual encoding phase described in detail below with respect to Class 3.

Once the $\sigma_i$ values are specified, encoding Q may continue by using two discrete sets $C_2$ and $D_2$, which may be known to both the encoder and decoder. The sizes of these sets may be powers of 2 and are typically small, containing 4 or 8 elements. The algorithm may process each half semi-diagonal independently. For the $i^{th}$ half semi-diagonal, i = 5, ..., 2n-5, the following expression may be evaluated:

$$\arg \min_{b_i,x_i} \sum_k \left(q_{i-k+1,k} - (b_i k + B(i) + x_i)\right)^2,$$

where the numbers $b_i$ may run through all elements of $(-1)^{\sigma i} D_2$ if i is odd and $(-1)^{\sigma i+1} D_2$ if i is even, and $x_i$ may run through $C_2$, and k may run through the indices of the half semi-diagonal. Furthermore, for each half semi-diagonal, $\rho_i = |B(i) - B(i-1)|$. Once these values are determined, the encoder may prepare the representation of Q.

First, the encoder may output the $\rho_k$ sequence using exponential Golomb codes in the following table.

Table 1:

| Values | Codes |
| --- | --- |
| 0 | 0 |
| 1-2 | 10x |
| 3-6 | 110xx |
| 7-14 | 1110xxx |
| 15-30 | 11110xxxx |
| 31-62 | 111110xxxxx |
| ... | ... |

Next, for each semi-diagonal i = 5...2n-5, the encoder may write $b_1$ and $x_1$ in the output, using $\log_2|D_2|$ and $\log_2|C_2|$ bits, respectively. After this process, the algorithm may proceed to the planar residual encoding phase described in more detail below.

In Class 3, the coding of this class may proceed as in Class 2, except only the half semi-diagonals from 1 to n may be encoded, instead of 1 to 2n-1, as was the case in Class 2. That is, the $\sigma_i$ and $\rho_1$ sequences may be defined and coded as before, but only for i=1,...,n. This part may also be concluded by the planar residual encoding phase described in detail below.

With regard to residual coding, the previous sections provided a compact, but so far possibly only approximate representation of the matrix Q. In the case that the representation was not exact, the values that do not match may be corrected or otherwise adjusted. Two simple residual encoding schemes may be used: (1) one for linear; and (2) the other for two dimensional (planar) data.

The linear residual encoding algorithm may take an input sequence $v_1, ..., v_n$. If all of these values are 0, a single "0" may be written to the output, and the algorithm may terminate. Otherwise, a "1" may be written to the output, and the algorithm may proceed to the next step.

In this step, the algorithm may receive an input sequence $v_1, ..., v_n$, where the sequence may contain at least one non-zero value. If the subsequence $v_1, ..., v_{n/2}$ is all zero, the algorithm may output "00" and recursively process $v_{n/2+1},...,v_n$. If the subsequence $v_{n/2+1}, ..., v_n$ is all zero, the algorithm may output "01" and recursively process $v_1, ..., v_{n/2}$. Finally, if both parts contain non-zero values, the algorithm may output "1" and recursively process both. This algorithm may terminate when n=1; in this case, if the original sequence was not binary, a further symbol may output at this position, indicating the correct or otherwise adjusted value.

The planar residual encoding algorithm may take an input matrix M[1,...,n][1,...,n]. UL, UR, LL, and LR may denote the upper left ([1,...,n/2][1,...,n/2]), upper right ([1,...,n/2][n/2+1,...,n]), lower left ([n/2+1,...,n][1,...,n/2]) and lower right ([[n/2+1,...,n]][ [n/2+1,...,n]]) quadrants of M, respectively. If all of these values are 0, a single "0" may be written to the output, and the algorithm may terminate. Otherwise, a "1" may be written to the output, and the algorithm may proceed to the next step.

In this step, the algorithm may receive the input matrix M where the process may assume that the matrix contain at least one non-zero value. The algorithm may determine which quadrants contain non-zero values and outputs the corresponding codeword from the following table.

Table 2:

| Non-zero quadrants | Codeword |
|---|---|
| UL | 0010 |
| UR | 0011 |
| LL | 0101 |
| LR | 1001 |
| UL, UR | 0100 |
| UL, LL | 0110 |
| UL, LR | 1010 |
| UR, LL | 0111 |
| UR, LR | 1011 |
| LL,LR | 1101 |
| UL, UR, LL | 1000 |
| UL, DR LR | 1100 |
| UL, LL, LR | 1110 |
| UR, LL, LR | 1111 |
| UL, UR, LL, LR | 000 |

Next, the algorithm may recursively process each non-zero quadrants. The algorithm may terminate when the matrix is reduced to a single value; in this case, a further symbol may output at this position, indicating the correct or otherwise adjusted value.

With respect to decoding algorithms, the following may provide, in some implementations, a more detailed algorithmic description of the components of the decoding algorithm. To specify the parsing process of the syntax elements, the following descriptors may be used:

- u(n): unsigned integer using n bits.
- ue(v): unsigned integer coded with the exponential Golomb codes given in regards to Class 1.
- ur(v): unsigned integer coded with the table in regards to Class 2.

The main level of the decoder may determine the transforms used to represent the matrix Q and may call the appropriate decoding subroutines. Finally, the output may be checked for residual correction, and applied to Q, if present. The input to the main level may be a matrix size n, and the output may be the matrix elements q[i][j] (0 <= i, j < n). As compared with the previous description, C-style array indices, starting from 0, may be used as indicated in the following table.

Table 3:

| parse_quantization_matrix(n) { | Descriptor |
|---|---|
| **transform_indicator** | u(1) |
| if (transform_indicator == 0) | |
| parse_class1(n) | |
| else { | |
| **transform_level** | u(1) |
| if (transform_level == 0) | |
| parse_class2(n) | |
| else | |
| parse_class3(n) | |
| } | |
| parse_residues(n) | |
| } | |

The parse_class1 function may decode the stream created using the expression described above. The semi-diagonals of Q may be modeled by quadratic functions, whose parameters may be read from the stream. Each semi-diagonal may be specified by four values, which may come from two known, discrete sets of values called D1 and C1. For the description, constants may be defined as $d1 = \log_2|D1|$ and $c1 = \log_2|C1|$. Semi-diagonals 1, 2, 3, 2n-3, 2n-2, 2n-1 may be processed separately by two appropriate functions specified later. The input to the main level may be the matrix size n, and the output may be the approximate matrix elements q[i][j] (0 <= i, j < n), that may execute residual correction.

Table 4:

| parse_classl(n) { | Descriptor |
|---|---|
| parse_upper_triangle(0) | |
| for(i=3; i<n;i++) { | |
| **b0** | u(d1) |
| **b1** | u(d1) |
| **b2** | u(d1) |
| **x** | u(c1) |
| for (k = 0; k <= i; k++) { | |
| q[i-k][k] = D 1[b2]*k*k + D1[b1]*k + D1 [b0] + C1 [x] | |
| } | |
| } | |
| for (i = n - 2; i > 2; i++) { | |
| **b0** | u(d1) |
| **b1** | u(d1) |
| **b2** | u(d1) |

(continued)

| x | u(c1) |
|---|---|
| for (k = 0; k <= i; k++) { | |
| q[n-1-k][n-1+k-i]=D1[b2]*k*k+D1[b1]*k+D1[b0]+C1[x] | |
| } | |
| } | |
| parse_lower_triangle(0) | |
| } | |

The parse_class2 function may decode the stream created with regard to Class1, Class 2, and/or Class 3. Since the matrix may be modeled as symmetric, only the half semi-diagonals may be decoded in this step. The half semi-diagonals of Q may be modeled by linear functions, whose parameters may read from the stream. Each half semi-diagonal may be specified by three values: the base, the difference and the correction. The base values for each semi-diagonal may be modeled by a linear function, and the modeling error maybe corrected by additional values read from the input. The difference may come from a known, discrete set of values called D2. The sign array may specify whether the progression is increasing (sign[i] = 1) or decreasing (sign[i] = -1), and the sign of the difference read from D2 may be adjusted accordingly. The correction value may come from a known, discrete set of values called C2, and it may be used to offset inaccuracies, which originate from the discretization of the difference values. For the description, constants may be defined as $d2 = \log_2|D2|$ and $c2 = \log_2|C2|$. Semi-diagonals 1, 2, 3, 4, 2n-4, 2n-3, 2n-2, 2n-1 may be process separately by two appropriate functions specified later. The input to the main level may be the matrix size n, and the output may be approximate matrix elements q[i][j] (0 <= i, j < n), that may execute residual correction.

Table 5:

| parse_class2(n) { | Descriptor |
|---|---|
| parse_upper_triangle(1) | |
| parse_sign_bits(2*n-9) | |
| for (k = 4; k < 2 * n-5 ; k++) { | |
| r | ue(v) |
| base[k] = base[k-1] + r | |
| } | |
| for (i = 4; i < n; i++) { | |
| b | u(d2) |
| x | u(c2) |
| for (k = 0; k <= i / 2; k++) | |
| q[i-k][k] = base[i] + C2[x] + sign[i]*D2[b]*k | |
| } | |
| for (i = n - 2; i > 2; i --) { | |
| b | u(d2) |
| x | u(c2) |
| for (k = 0; k <= i / 2; k++) | |
| q[n-1-k][n-1+k-i] = base[i] + C2[x] + sign[i]*D2[b]*k | |
| } | |
| parse_lower_triangle(1) | |
| for (i = 0; i < n - 1; i++) | |

(continued)

| | |
|---|---|
| for(j = i + 1 ; j < n ; j++) | |
| q[i][j] = q[j][i]; | |
| } | |

The parse_class3 function may decode the stream created in regards to Class 1, Class 2, and/or Class 3. Since the matrix may be modeled as symmetric for both diagonals, only the first n half semi-diagonals may be decoded in this step; the rest may be filled in using the known 45° symmetry. Apart from this, the procedure may be substantially identical to parse_class2. The input to the main level may be the matrix size n, and the output may be the approximate matrix elements q[i][j] (0 <= i, j < n), that may execute residual correction.

Table 6:

| parse_class3(n) { | Descriptor |
|---|---|
| **pair_sum** | u(8) |
| parse_upper_triangle(1) | |
| parse_sign_bits(n-4) | |
| for (k = 4; k < n; k++) { | |
| **r** | ue(v) |
| base[k] = base[k-1] + r | |
| } | |
| for (i = 3 ; i < n ; i++) { | |
| **b** | u(d2) |
| **x** | u(c2) |
| for (k = 0; k <= i / 2; k++) | |
| q[i-k][k] = base[i] + C2[x] + sign[i]*D2[b]*k | |
| } | |
| for (i = n - 2; i > 2; i--) | |
| for (j = 0; j ⇐ i / 2; j++) | |
| q[n-1-j][n-1+j-1] = pair_sum - q[i-j][j] | |
| for (i = 0; i < n - 1 ; i++) | |
| for (j = i + 1 ; j < n ; j++) | |
| q[i][j] = q[j][1]; | |
| } | |

The parse_residues function may read a binary symbol and, if this symbol is 1, may call the parse_res_segment function with parameters (0, n, 0, n), where n is the size of matrix Q. The parse_res_segment function may recursively evaluate the quadrants that contain non-zero elements. If a quadrant is reduced to a single cell, a correction value may be parsed from the input, and added to the corresponding element of Q.

Table 7:

| parse_res_segment(left, right, top, bottom) { | Descriptor |
|---|---|
| if (left == right-1 && top == bottom-1) { | |
| **residue** | ue(v) |
| if (residue & 1) | |

(continued)

| | |
|---|---|
| q[top][left] - = residue >> 1 | |
| else | |
| q[top] [left] + = residue>> 1 | |
| } | |
| else { | |
| **code** | ur(v) |
| if (code == 0) | |
| code = 16 | |
| code-- | |
| if (code & 1) | |
| parse_res_segment(left, left + (right-left)/2, top, top + (bottom-top)/2)) | |
| if (code & 2) | |
| parse_res_segment(left + (right-left)/2, right, top, top + (bottom-top)/2)) | |
| if (code & 4) | |
| parse_res_segment(left, left + (right-left)/2, top + (bottom-top)/2), bottom) | |
| if (code & 8) | |
| parse_res_segment(left + (right-left)/2, right, top + (bottom-top)/2), bottom) | |
| } | |
| } | |

The parse_sign_bits function my be similar in structure to parse_residues, except that it may work in 1 dimension, and output values may be flagged, rather than added or subtracted to a value. Also, this function may invert the sign for odd semi-diagonals.

The parse_upper_triangle may read the values q[0][0], q[1][0], q[2][0] and q[1][1]; additionally, if a positive parameter is specified, q[3][0] and q[2][1], otherwise q[0][1] and q[0][2]. The latter values may be used when Q does not satisfy the 135° symmetry. All of these values may be coded with ue(v).

The parse_lower_triangle may read the values 256 - q[n-1][n-1], 256 - q[n-1][n-2], 256 - q[n-1][n-3] and 256 - q[n-2][n-2]; additionally, if a positive parameter is specified, 256 - q[n-1][n-4] and 256 - q[n-2][n-3], otherwise 256 - q[n-2][n-1] and 256 - q[n-3][n-1]. The latter values may be used when Q does not satisfy the 135° symmetry. All of these values may be coded with ue(v).

For example, the following illustrates the coding process of Class 1, Class 2, and/or Class 3 on the following matrix:

$$Q = \begin{matrix} 8, & 11, & 23, & 26, & 50, & 53, & 89, & 92 \\ 11, & 20, & 29, & 47, & 56, & 86, & 95, & 134 \\ 23, & 29, & 44, & 59, & 83, & 98, & 131, & 137 \\ 26, & 47, & 59, & 80, & 101, & 128, & 140, & 167 \\ 50, & 56, & 83, & 101, & 125, & 143, & 164, & 170 \\ 53, & 86, & 98, & 128, & 143, & 161, & 173, & 188 \\ 89, & 95, & 131, & 140, & 164, & 173, & 185, & 191 \\ 92, & 134, & 137, & 167, & 170, & 188, & 191, & 197 \end{matrix}$$

Following the instructions described with respect to the classification of the matrix, the process may determine that $S_1$=0, R=204.66 and $S_2$=9.59. Hence Q may satisfy the 45° symmetry, but assuming that T2 < 9.59, not the 135° symmetry, therefore it may belong to Class 2. The sequence "10" may be written to the output at this point.

Continuing with residual coding, the half semi-diagonals (1, 2, 3, 4) may be encoded next. The decoding algorithm described below may give the description for encoding the values (8, 11, 23, 20, 26, 29) with the code in Table 2. This results in the sequence may be

1110001 1110100 111101000 111100101 111101011 1111011110

The next step may be to evaluate $s_5 = 0$, $s_6 = 2$, $s_7 = 0$, $s_8 = 3$, $s_9 = 0$, $s_{10} = 2$, $s_{11} = 0$. This yields $\sigma_5 = ... = \sigma_{11} = 0$, so the $\sigma$ sequence may be encoded by a single "0" bit.

The next step may evaluate B(5)=50, B(6)=53, B(7)=89, B(8)=92, B(9)=134, B(10)=137, B(11)=167, and may obtain $\rho_5 = 24$, $\rho_6 = 3$, $\rho_7 = 36$, $\rho_8 = 3$, $\rho_9 = 42$, $\rho_{10} = 3$, $\rho_{11} = 30$. Encoding these values my result in the following sequence:

111101001 11000 11111000101 11000 1111100101111000 111101111

In this example, the following may be set: D2 = { 1, 2, 3, 4 } and C2 = {0, -0.5}. Then, since all of the half semi-diagonals form an arithmetic progression with difference 3, the following may be set as $b_i = 2$ and $x_i = 0$ for all i = 5, ..., 11. The encoded sequence may be:

100100100100100100100

This concludes residual coding, and part (3) begins. However, the reconstructed matrix may already match the original, so at this point the encoder may output a single "0", and the algorithm may terminate. The resulting encoded sequence may be:

10111000 11110100 11110100 01111001 01111101 01111110 11110011 11010011 10001111 10001011 10001111 10010111 10001111 01111100 10010010 01001001 000

with the total length of 131 bits. This compares well with the best lossless result for the same matrix, which was 178 bits.

In some implementations, the process may execute QuYK, which may be referred to as a universal method. The algorithm introduced above may be efficient for matrices that satisfy the identified constraints, but it becomes inefficient when the statistics of the matrix deviate significantly from these assumptions. Though, efficient compression of quantization matrices of different types may be useful. Since this establishes a demand for the coding of a wide range of matrices, the following description describes a universal algorithm, which may offer very good compression performance for a broad range of quantization matrices, and it may prove to be universal from a theoretical point of view. A further strength of this algorithm is that its decoding complexity, both computational and regarding memory requirements, may be very low. This algorithm is an appropriately modified variant of the grammar-based compression algorithm, now commonly known as the YK algorithm.

Note that though the QuYK (pronounced as "Quick") algorithm is described on the basis of the YK algorithm, any 1D or multi-dimensional grammar-based codes may be used in place of the YK algorithm if so preferred. Further, if additional prior knowledge of the data (quantization matrices) is available, the context-dependent YK (CYK) algorithm and its variant may be used to further improve the compression performance by taking advantage of the a priori knowledge.

The encoding algorithm has two parts. The first part, described in connection with sequential transforms, transforms the matrix Q into a sequence, using the differences of consecutive values. The second part encodes this sequence into a lossless representation of the matrix using a grammar-based transform, which is explained in with grammar transforms. The decoding process is reviewed in section below describing decoding grammar transforms.

In regards to sequential transform, the first part may transform the matrix Q into a sequential representation. There may be various scanning methods to do this, so the following method is for exemplary purposes only. Apart from the scanning order, a differential coding scheme DC may be executed, which may map signed integers to unsigned values. As an example, the following may be use DC(0) = 0, DC(1)=1, DC(-1)=2, DC(2)=3, and in general DC(k) = 2|k| - $\chi$(k > 0).

If Q is not symmetrical, that is, $S_1 > 0$ using the notations of described above with respect to classification of the matrix, zig-zag scanning may be applied, where all symbols, except the first one, may be coded using the difference of its predecessor. The coding order and the resulting output symbols may be $q_{11}$, DC($q_{21}-q_{11}$), DC($q_{12}-q_{21}$), DC($q_{13}-q_{12}$), DC($q_{22}-q_{13}$), DC($q_{31}-q_{22}$), DC($q_{41}-q_{31}$), DC($q_{32}-q_{41}$), DC($q_{23}-q_{32}$), DC($q_{14}-q_{23}$), DC($q_{15}-q_{14}$), DC($q_{24}-q_{15}$), etc. Another scanning technique may be to encode the first column, then the last row, and then the remaining symbol of each semi-diagonal: $q_{11}$, DC($q_{21}-q_{11}$), DC($q_{31}-q_{21}$),...,DC($q_{n1}-q_{n-1,1}$), DC($q_{n2}-q_{n1}$), DC($q_{n3}-q_{n2}$), ..., DC($q_{nn}-q_{nn-1}$). The semidiagonal i maybe encoded by using its already known base B(i)=$q_{i1}$ to start the differences: DC($q_{i-1,2}-qi_1$), DC($q_{i-2,3}-q_{i-1,2}$), ..., DC($q_{1i}-q_{2,i-1}$). For i>n, the semi-diagonal may be coded with the obvious changes in the indices.

If Q is symmetrical, then the scanning order may omit the elements above the main diagonal of Q. The first scanning order may become $q_{11}$, DC($q_{21}-q_{11}$), DC($q_{31}-q_{21}$), DC($q_{22}-q_{31}$), DC($q_{32}-q_{22}$), DC($q_{41}-q_{32}$), DC($q_{51}-q_{41}$), DC

($q_{42}$-$q_{51}$), DC($q_{33}$-$q_{42}$), DC($q_{43}$-$q_{33}$), DC($q_{52}$-$q_{43}$), etc. The second scanning order may encode the first column and the last row as before: $q_{11}$, DC($q_{21}$-$q_{11}$), DC($q_{31}$-$q_{21}$),...,DC($q_{n1}$-$q_{n-1,1}$), DC($q_{n2}$-$q_{n1}$), DC($q_{n3}$-$q_{n2}$), ..., DC($q_{nn}$-$q_{n,n-1}$), then semi-diagonal i may encoded only up to the main diagonal: DC($q_{i-1,2}$-$q_{i1}$), DC($q_{i-2,3}$-$q_{i-1,2}$), ..., DC ($q_{(i+1)/2,(i+1)/2}$-$q_{(i+3)/2,(i-1)/2}$). For i>n, the semi-diagonal may be coded with the obvious changes in the indices. The resulting input sequence may be identified as D.

For example, using the second scanning order, the 8x8 Q matrix identified above may be transformed into the following sequence, considering that it is symmetrical: D = { 8, 5, 23, 5, 47, 5, 71, 5, 83, 5, 59, 5, 35, 5, 11, 6, 5, 6, 6, 5, 5, 6, 6, 6, 5, 5, 5, 5, 6, 6, 6, 5, 5, 6, 6, 5, 6}.

With respect to grammar transforms, the final irreducible grammar G for D may be constructed by the irreducible grammar transform. This may create production rules $R_0$, ..., $R_M$ of the form $R_k \rightarrow G(R_k) = v_{k,1}...v_{k,nk}$, with $R_0$ denoting the input sequence D. On the right-hand side of the rule, $v_{k,j}$ may be either a symbol from D, or a variable from G. For each d in D define h(d) = 0, and for each production rule $R_k$, k = 0, ..., M, let $h(R_k) = \max\{h(v_{k,1}), ..., h(v_{k,nk})\} + 1$. The values $h(R_1)$, ..., $h(R_M)$ may be sorted in increasing order, and for each k = 1, ..., M t(k) may be the position of $h(R_k)$ in the sorted sequence. Each variable may be relabeled according to $k \rightarrow t(k)$. The resulting grammar may form the basis of the encoded output.

For example, for the set D above, the final irreducible grammar may be the following:

$R0 \rightarrow$ 8 5 23 5 47 5 71 5 83 5 59 5 35 5 11 $R_1$ $R_2$ $R_3$ 5 $R_3$ $R_4$ 6
$R1 \rightarrow$ 6 5
$R2 \rightarrow R_4$ 5
$R3 \rightarrow$ 6 $R_2$
$R4 \rightarrow$ 6 $R_1$

For this grammar, $h(R_1)$ = 1, $h(R_2)$ = 3, $h(R_3)$ = 4, $h(R_4)$ = 2, so the variables may be relabled as ($R_1$, $R_2$, $R_3$, $R_4$) $\rightarrow$ ($R_1$, $R_3$, $R_4$, $R_2$). The final grammar may be:

$R_0 \rightarrow$ 8 5 23 5 47 5 71 5 83 5 59 5 35 5 11 $R_1$ $R_3$ $R_4$ 5 $R_4$ $R_2$ 6
$R_1 \rightarrow$ 6 5
$R_2 \rightarrow$ 6 $R_1$
$R_3 \rightarrow R_2$ 5
$R4 \rightarrow$ 6 $R_3$

Once this grammar is formed, the output may be constructed, which may be a single sequence of values, each value stored in a b-bit representation, in the following way. A value A may be fixed, which may be larger than any value in D, and another value B, such that A + M < B, and B + $n_k$ - 2 < $2^b$ for each k = 1,...,M. These values may be known to both the encoder and the decoder, so they may not be transmitted in the compressed file. Then in the relabeled final grammar, output $G(R_k)$ for k = 1, ..., M, such that:

- For each d in D, write d in the output
- For each $R_k$, k = 1, ..., M, write A + k in the output
- If the right-hand side of $G(R_k)$ has length g > 2, then write B + g - 2 before $G(R_k)$.

Finally, the sequence may terminated by writing B, followed by $G(R_0)$ expanded as above, but without its length, followed by A.

For example, b=8 may be used, and set A=128, B=224. The first rule to write may be $R_1$, which may be of length 2, and produces:

6 5

This is followed by $R_2 \rightarrow$ 6 $R_1$, which may be represented as (6, A+1):

6 129

Similarly, $R_3$ and $R_4$ may become (A+2, 5) and (6, A+3), respectively:

130 5 6 131

This leads us to $R_0$, for which we first write B, then $G(R_0)$, may be terminated by A:

224 8 5 23 5 47 5 71 5 83 5 59 5 35 5 11 129 131 132 5 132 130 6 128

The description of sequence D, hence matrix Q, may be complete. The final output may be:

6, 5, 6, 129, 130, 5, 6, 131, 224, 8, 5, 23, 5, 47, 5, 71, 5, 83, 5, 59, 5, 35, 5, 11, 129, 131, 132, 5, 132, 130, 6 128.

With respect to decoding grammar transforms, corresponding to the encoding process, the decoding process of the QuYk algorithm may consist of two parts: 1) decoding and parsing the grammar into a sequence; and 2) reconstructing the matrix from the sequence.

As such, decoding may work as follows, by sequentially processing the encoded values. First the production rules $R_1$, ..., $R_M$ may be reconstructed (it may be advantageous, though not necessary for decoding, to know M beforehand, for easy memory allocation. Alternatively, the upper limit M < B - A may be used to allocate memory). If a rule starts with a value B+k, then the length may be identified as k+2, otherwise it may be 2. The next that many symbols for the rule may be processed. Any value less than A may refer to a symbol, and it may be copied into the rule. Any value of the form A+k, but less than B, may refer to the rule $R_k$, which may already be fully decoded by the time it is first referred, as may be guaranteed by our grammar construction algorithm. At this point $G(R_k)$ may be substituted in place of A+k. Finally, the first and only occurrence of B signals that the start rule $R_0$, which may be terminated by the unique symbol A, by which time may have been fully recovered our original sequence.

For the decoding procedure, two variants may be executed: (1) one being memory-efficient; and (2) the other being speed-efficient. In the memory-efficient version, production rules may be stored in their grammar form, as illustrated by the example above, with both symbols and variables occurring at the right-hand side, and when $R_0$ is processed, the variables may be recursively expanded on reference. In the speed-efficient version each rule may be expanded to symbols as it is decoded, and subsequent references may simply copy those symbols without any recursive calls. Therefore, for the example above, the decoder may create the following:

$R_1 \rightarrow 6\ 5$
$R_2 \rightarrow 6\ 6\ 5$
$R_3 \rightarrow 6\ 6\ 5\ 5$
$R_4 \rightarrow 6\ 6\ 6\ 5\ 5$
$R_0 \rightarrow 8\ 5\ 23\ 5\ 47\ 5\ 71\ 5\ 83\ 5\ 59\ 5\ 35\ 5\ 11\ 6\ 5\ 6\ 6\ 5\ 5\ 6\ 6\ 6\ 5\ 5\ 5\ 6\ 6\ 6\ 5\ 5\ 6\ 6\ 5\ 6$

$R_0$ now may give the sequence D, from which the reconstruction of the original matrix Q may be straightforward.

A detailed implementation of the QuYK decoder is provided below. For the variables we use the same terminology as in Section 4.

In line with the encoder description, the decoder has two parts: the first part decodes the grammar and reconstructs the sequential form of the matrix; the second part reassembles the matrix from this sequential description.

Decoding the grammar takes four parameters:

● size: the size of the matrix (n in Section 6.1)
● bits: number of bits representing a syntax element (b in regards to sequential transforms)
● startRule: identifies where the start rule begins in the encoded sequence (B in Section 6.3)
● stopRule: the number of terminal symbols (A in regards to decoding grammar transforms)

The algorithm produces the array sequence (D in regards to decoding grammar transforms) of length seqLength.

Note that the variables bits, startRule and stopRule may be sent to the decoder separately. One option is to make them constant in both the encoder and the decoder. Another option is to encode the value (bits-1) as u(3), and then compute stopRule and startRule using bits, for example, stopRule = 1<<(bits-1), startRule = (1<<bits) - (1 <<(bits-2)).

The following specification for parseQuantizationMatrix decodes and reconstructs the sequence encoded by the method in regards to grammar transforms.

| parseQuantizationMatrix(size, bits, startRule, stopRule) { | Description |
|---|---|
| varIndex = 1 | |
| **symbol** | u(bits) |
| while (symbol != startRule) { | |
| varLength = 2 | |

(continued)

| | |
|---|---|
| if (symbol > startRule) { | |
| varLength = symbol - startRule + 2 | |
| **symbol** | u(bits) |
| } | |
| ruleLength[varIndex] = 0 | |
| for (k = 0; k < varLength; k++) { | |
| if (symbol < stopRule) | |
| prodRule[varIndex][ruleLength[varIndex]++] = symbol | |
| else { | |
| symbol -= stopRule | |
| memcpy(prodRule[varIndex] + ruleLength[varIndex], | |
| prodRule[symbol], ruleLength[symbol]) | |
| ruleLength[varIndex] += ruleLength[symbol] | |
| } | |
| **symbol** | u(bits) |
| } | |
| varIndex++ | |
| } | |
| seqLength = 0 | |
| **symbol** | u(bits) |
| while (symbol != stopRule) { | |
| if (symbol < stopRule) | |
| sequence[seqLength++] = symbol | |
| else { | |
| symbol -= stopRule | |
| memcpy(sequence + seqLength, prodRule[symbol], | |
| ruleLength[symbol]) | |
| seqLength += ruleLength[symbol] | |
| } | |
| **symbol** | u(bits) |
| } | |
| } | |

How to reconstruct the original quantization matrix from the sequence depends on the scanning order used, and whether the matrix was symmetric or not. Here we give the decoder for symmetric matrices, using the second scanning order, as in the example of grammar transforms.

| reconstructSymmetricMatrix(size, sequence, seqLength { | Description |
|---|---|
| len= 0 | |

(continued)

| reconstructSymmetricMatrix(size, sequence, seqLength { | Description |
|---|---|
| matrix[0][0] = sequence [len++] | |
| prev = matrix[0][0] | |
| for (k = 1; k < size; k++) { | |
| matrix[k][0] = prev + UInt2Int(sequence[len++]) | |
| prev = matrix[k][0] | |
| } | |
| for (k = 1; k < size; k++) { | |
| matrix[size - 1][k] = prev + UInt2Int(sequence[len++]) | |
| prev = matrix[size - 1][k] | |
| } | |
| for (k = 1; k < size; k++) { | |
| prev = matrix[k][0] | |
| for (j = 1; k - j >= j; j++) { | |
| matrix[k - j][j] = prev + UInt2Int(sequence[len++]) | |
| prev = matrix[k - j][j] | |
| } | |
| } | |
| for (k = 1; k < size - 1; k++) { | |
| prev = matrix[size - 1][k] | |
| for (j = 1; size - j - 1 >= k + j; j++) { | |
| matrix[size - j - 1][k+j] = prev + UInt2Int(sequence[len++]) | |
| prev = matrix[size - j - 1][k+ j] | |
| } | |
| } | |
| } | |

The description becomes complete with the definition of the UInt2Int function, which is the inverse of theDC function in sequential transforms:

| UInt2Int(uiValue) { | Description |
|---|---|
| | |
| if (uiValue & 1) | |
| return (uiValue + 1) / 2 | |
| else if (uiValue > 0) | |
| return - uiValue / 2 | |
| else | |
| return 0 | |

(continued)

| | |
|---|---|
| } | |

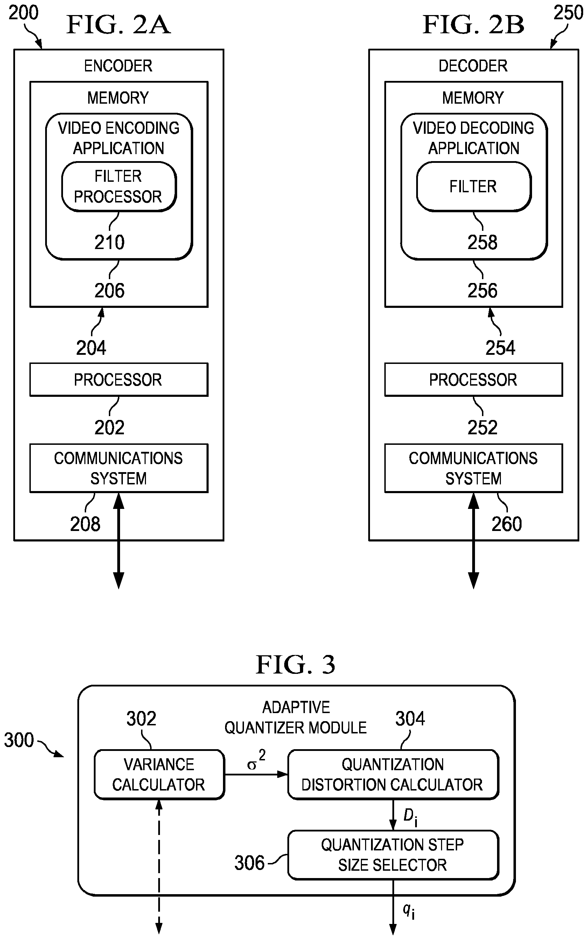

Reference is now made to Figure 2A, which shows a simplified block diagram of an exemplary embodiment of an encoder 200. The encoder 200 includes a processor 202, a memory 204 accessible by the processor 202, and a video encoding application 206. The encoding application 206 may include a computer program or application stored in the memory 204 and containing instructions for configuring the processor 202 to perform steps or operations such as those described herein. The encoding application 206 may include one or more components or modules for performing various aspects of the techniques described herein. For example, a matrix encoding module 210 can be included as a module of the encoding application 206. The encoding application 206, or any of its modules, may be stored in any combination of the memory 204 of the encoder 200, and any other accessible computer readable storage medium, such as a compact disc, flash memory device, random access memory, hard drive, etc. The encoder 200 also includes a communications interface 208 accessible by the processor 202 to transmit a bitstream comprising encoded video data generated by the processor 202 executing the encoding application 206.

Reference is now also made to FIG. 2B, which shows a simplified block diagram of an exemplary embodiment of a decoder 250. The decoder 250 includes a processor 252, a memory 254, and a decoding application 256. The decoding application 256 may include a computer program or application stored in the memory 254 and containing instructions for configuring the processor 252 to perform steps or operations such as those described herein. The decoding application 256 may include one or more components or modules for performing various aspects of the techniques described herein. For example, a matrix decoding module 258 can be included as a module of the decoding application 256. The decoding application 256, or any of its modules, may be stored in any combination of the memory 254 of the decoder 250, and any other accessible computer readable storage medium, such as a compact disc, flash memory device, random access memory, hard drive, etc. The decoder 250 also includes a communications interface 260 accessible by the processor 252 to receive a bitstream comprising encoded video data to be decoded by the processor 252 executing the decoding application 256.

FIGURE 3 is a block diagram of an adaptive quantizer module 300 for an encoder. The adaptive quantizer module 300 may be configured to generate quantization matrices that are encoded using the methods described above. The adaptive quantizer module 300 includes a variance calculator 302 that determines the variance $\sigma 2$ for each DCT coefficient position that result from the initial processing of the frame, as described. The variance calculator 302 supplies the variance $\sigma 2$ information to the quantization distortion calculator 304, which is configured to determine the quantization distortion Di. Specifically, the quantization distortions D1...D16 for each coefficient position are determined based on the variances for each coefficient position and the desired average pixel domain distortion D0. The adaptive quantizer module 300 further includes a quantization step size selector 306, which finds the quantization step sizes q1...q16 for best realizing the determined quantization distortions D1...D16. The selected quantization step sizes q1...q16 are then used by the quantizer 24 to reprocess the frame, as described above.

Although illustrated as separate modules, components, or calculators for ease of description and discussion, it will be appreciated that many implementations are possible, depending on the encoder and the configuration of the software for realizing the encoding process.

The decoder or encoder or both may be implemented in a number of computing devices, including, without limitation, servers, suitably programmed general purpose computers, set-top television boxes, television broadcast equipment, and mobile devices. The decoder or encoder may be implemented by way of software containing instructions for configuring a processor to carry out the functions described herein. The software instructions may be stored on any suitable computer-readable memory, including CDs, RAM, ROM, Flash memory, etc.

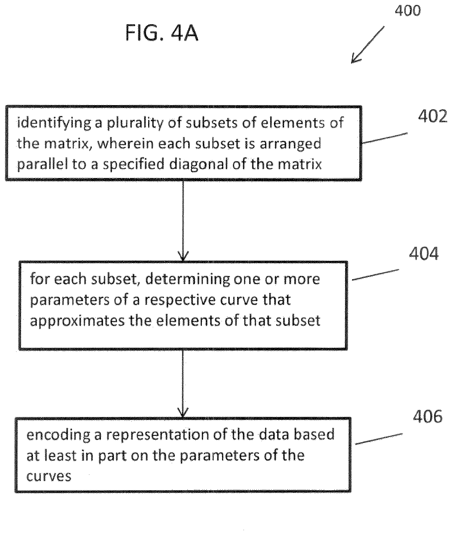

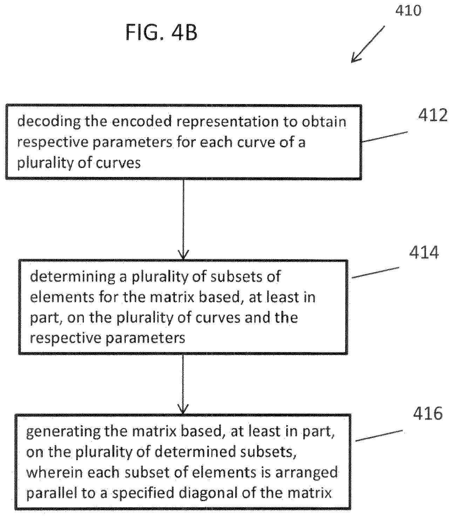

FIGURES 4A and 4B are flow charts illustrating example methods for encoding and decoding data, respectively. Referring to 4A, method 400 begins at step 402 where a plurality of subsets of elements of the matrix is identified, wherein each subset is arranged parallel to a specified diagonal of the matrix. At step 404, for each subset, one or more parameters of a respective curve that approximates the elements of that subset are determined. Next, at step 406, a representation of the data based at least in part on the parameters of the curves is encoded. Referring to FIGURE 4B, method 410 begins at step 412 where the encoded representation to obtain respective parameters for each curve of a plurality of curves is decoded. At step 414, a plurality of subsets of elements for the matrix based, at least in part, on the plurality of curves and the respective parameters is determined. Next, at step 415, the matrix is generated based, at least in part, on the plurality of determined subsets, wherein each subset of elements is arranged parallel to a specified diagonal of the matrix.

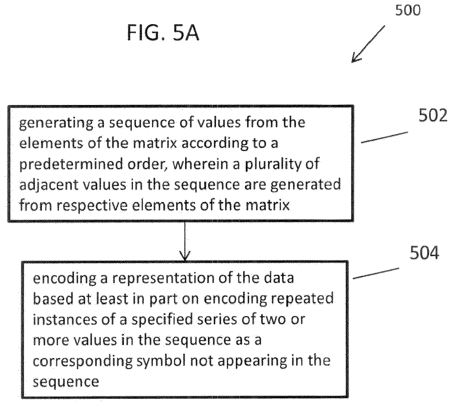

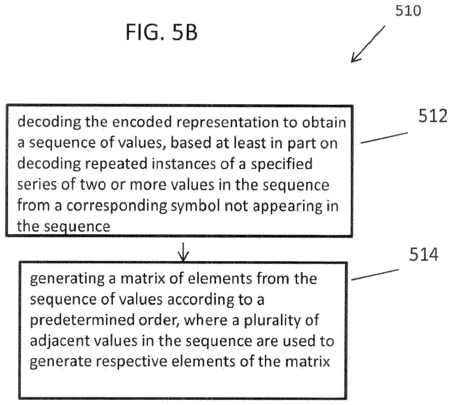

FIGURES 5A and 5B are flow charts illustrating additional example methods for encoding and decoding data, respectively. Referring to 5A, method 500 begins at step 502 where a sequence of values from the elements of the matrix according to a predetermined order is generated, wherein a plurality of adjacent values in the sequence are generated from respective elements of the matrix. At step 504, a representation of the data is encoded based at least in part on encoding repeated instances of a specified series of two or more values in the sequence as a corresponding symbol not appearing in the sequence. Referring to FIGURE 5B, method 510 begins at step 512 where the encoded representation to obtain a sequence of values is decoded based at least in part on decoding repeated instances of a specified series of two or more values in the sequence from a corresponding symbol not appearing in the sequence. At step 514, a matrix of elements is generated from the sequence of values according to a predetermined order, where a plurality of adjacent values in the sequence is used to generate respective elements of the matrix.

It will be understood that the encoder described herein and the module, routine, process, thread, or other software component implementing the described method/process for configuring the encoder may be realized using standard computer programming techniques and languages. The techniques described herein are not limited to particular processors, computer languages, computer programming conventions, data structures, or other such implementation details. The described processes may be implemented as a part of computer-executable code stored in volatile or non-volatile memory, as part of an application-specific integrated chip (ASIC), etc.

A number of embodiments of the invention have been described. Nevertheless, it will be understood that various modifications may be made without departing from the spirit and scope of the invention. Accordingly, other embodiments are within the scope of the following claims.

**Claims**

1.  A method for encoding data comprising a matrix of elements for scaling transform coefficients before quantization of the scaled transform coefficients, the method comprising:

    generating a sequence of values from the elements of the matrix according to a predetermined order, wherein a plurality of adjacent values in the sequence are generated from respective elements of the matrix; and
    encoding a representation of the data based at least in part on encoding repeated instances of a specified series of two or more values in the sequence as a corresponding symbol not appearing in the sequence.

2.  The method of claim 1, wherein the plurality of adjacent values is arranged parallel to a specified diagonal of the matrix.

3.  The method of claim 1, wherein generating the sequence of values from the elements of the matrix includes generating at least some of the values based on a difference between two adjacent elements of the matrix.

4.  The method of claim 1, wherein the representation indicates a set of production rules in the representation of the data, wherein the rules each identify a respective symbol that corresponds to a specified series of values, and rules referencing other rules follow those other rules in the representation.

5.  The method of claim 1, wherein the representation indicates a set of rules, each rule identifies a respective symbol that corresponds to a specified series of values, and rules referencing other rules follow those other rules in the representation.

6.  An encoder for encoding data comprising a matrix of elements for scaling transform coefficients before quantization of the scaled transform coefficients, the encoder including one or more processors configured to execute instructions which cause the encoder to perform the method of any of claims 1 to 5.

7.  A method for decoding an encoded representation of a matrix of elements for scaling transform coefficients before quantization of the scaled transform coefficients, the method comprising:

    decoding the encoded representation to obtain a sequence of values, based at least in part on decoding repeated instances of a specified series of two or more values in the sequence from a corresponding symbol not appearing in the sequence; and
    generating a matrix of elements from the sequence of values according to a predetermined order, where a plurality of adjacent values in the sequence are used to generate respective elements of the matrix.

8.  A decoder for decoding an encoded representation of a matrix of elements for scaling transform coefficients before quantization of the scaled transform coefficients, the decoder including one or more processors configured to execute instructions comprising:

decoding the encoded representation to obtain a sequence of values, based at least in part on decoding repeated instances of a specified series of two or more values in the sequence from a corresponding symbol not appearing in the sequence; and

generating a matrix of elements from the sequence of values according to a predetermined order, where a plurality of adjacent values in the sequence are used to generate respective elements of the matrix.

9. A computer program product for encoding data comprising a matrix of elements for scaling transform coefficients before quantization of the scaled transform coefficients encoded on a non-transitory, tangible storage medium, the product comprising computer readable instructions for causing at least one processor to perform operations comprising:

generating a sequence of values from the elements of the matrix according to a predetermined order, wherein a plurality of adjacent values in the sequence are generated from respective elements of the matrix; and

encoding a representation of the data based at least in part on encoding repeated instances of a specified series of two or more values in the sequence as a corresponding symbol not appearing in the sequence.

10. A computer program product for decoding an encoded representation of a matrix of elements for scaling transform coefficients before quantization of the scaled transform coefficients encoded on a non-transitory, tangible storage medium, the product comprising computer readable instructions for causing at least one processor to perform operations comprising:

decoding the encoded representation to obtain a sequence of values, based at least in part on decoding repeated instances of a specified series of two or more values in the sequence from a corresponding symbol not appearing in the sequence; and

generating a matrix of elements from the sequence of values according to a predetermined order, where a plurality of adjacent values in the sequence are used to generate respective elements of the matrix.

11. A method for decoding an encoded representation of a matrix, the method comprising:

decoding the encoded representation to obtain respective parameters for each curve of a plurality of curves; determining a plurality of subsets of elements for the matrix based, at least in part, on the plurality of curves and the respective parameters; and

generating the matrix based, at least in part, on the plurality of determined subsets, wherein each subset of elements is arranged parallel to a specified diagonal of the matrix.

12. The method of claim 11, wherein determining the plurality of subsets of elements includes determining a symmetry of the matrix.

13. The method of claim 11, wherein the encoded representation includes residual information identifying deviations of elements from respective curves that approximate the elements.

14. A decoder for decoding an encoded representation of a matrix, the decoder including one or more processors configured to execute instructions which cause the decoder to perform the method of any of claims 11 to 13.

100

FIG. 1A

101

106

108

102a

102c

104

NETWORK

102d

102e

102b

110

112

EP 2 498 497 A1

FIG. 1B

150

154

152

20

200    # FIG. 2A

**ENCODER**

MEMORY

VIDEO ENCODING
APPLICATION

FILTER
PROCESSOR

210

206

204

PROCESSOR

202

COMMUNICATIONS
SYSTEM

208

250    # FIG. 2B

**DECODER**

MEMORY

VIDEO DECODING
APPLICATION

FILTER

258

256

254

PROCESSOR

252

COMMUNICATIONS
SYSTEM

260

# FIG. 3

**ADAPTIVE QUANTIZER MODULE**

302

304

300

VARIANCE
CALCULATOR

$\sigma^2$

QUANTIZATION
DISTORTION CALCULATOR

$D_i$

306

QUANTIZATION STEP
SIZE SELECTOR

$q_i$

FIG. 4A

400

identifying a plurality of subsets of elements of
the matrix, wherein each subset is arranged
parallel to a specified diagonal of the matrix

402

for each subset, determining one or more
parameters of a respective curve that
approximates the elements of that subset

404

encoding a representation of the data based
at least in part on the parameters of the
curves

406

FIG. 4B

410

412

decoding the encoded representation to obtain
respective parameters for each curve of a
plurality of curves

414

determining a plurality of subsets of
elements for the matrix based, at least in
part, on the plurality of curves and the
respective parameters

416

generating the matrix based, at least in part,
on the plurality of determined subsets,
wherein each subset of elements is arranged
parallel to a specified diagonal of the matrix

FIG. 5A

500

502

generating a sequence of values from the elements of the matrix according to a predetermined order, wherein a plurality of adjacent values in the sequence are generated from respective elements of the matrix

504

encoding a representation of the data based at least in part on encoding repeated instances of a specified series of two or more values in the sequence as a corresponding symbol not appearing in the sequence

FIG. 5B

510

┌──────────────────────────────────────────────┐
│ decoding the encoded representation to obtain  │  512
│ a sequence of values, based at least in part on │
│ decoding repeated instances of a specified     │
│ series of two or more values in the sequence   │
│ from a corresponding symbol not appearing in   │
│ the sequence                                   │
└──────────────────────────────────────────────┘

┌──────────────────────────────────────────────┐
│ generating a matrix of elements from the       │  514
│ sequence of values according to a              │
│ predetermined order, where a plurality of      │
│ adjacent values in the sequence are used to    │
│ generate respective elements of the matrix     │
└──────────────────────────────────────────────┘

EP 2 498 497 A1

Europäisches
Patentamt
European
Patent Office
Office européen
des brevets

**EUROPEAN SEARCH REPORT**

Application Number

EP 12 15 8956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU M ET AL: "Compact representation of quantization matrices for HEVC", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/, no. JCTVC-D024, 15 January 2011 (2011-01-15), XP030008065, ISSN: 0000-0015 | 1-3,6-14 | INV. H04N7/26 |
| A | * the whole document * | 4,5 | |
| X | SAHA S K ET AL: "Lossless compression of JPEG and GIF files through lexical permutation sorting with Greedy Sequential Grammar Transform based compression", COMPUTER AND INFORMATION TECHNOLOGY, 2008. ICCIT 2008. 10TH INTERNATIONAL CONFERENCE ON, IEEE, PISCATAWAY, NJ, USA, 27 December 2007 (2007-12-27), pages 1-5, XP031291805, ISBN: 978-1-4244-1550-2 | 1,4-11, 14 | |
| | | | TECHNICAL FIELDS SEARCHED (IPC) |
| | | | H04N |
| A | * the whole document * | 2,3,12, 13 | |
| A | EN-HUI YANG ET AL: "Efficient Universal Lossless Data Compression Algorithms Based on a Greedy Sequential Grammar Transform-Part One: Without Context Models", IEEE TRANSACTIONS ON INFORMATION THEORY, IEEE PRESS, USA, vol. 46, no. 3, 1 May 2000 (2000-05-01), XP011027647, ISSN: 0018-9448 * the whole document * | 1-14 | |
| | -/-- | | |

The present search report has been drawn up for all claims

| Place of search | Date of completion of the search | Examiner |
|---|---|---|
| Munich | 24 May 2012 | Cyranka, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

26

Europäisches
Patentamt

European
Patent Office

Office européen
des brevets

# EUROPEAN SEARCH REPORT

Application Number

EP 12 15 8956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EN-HUI YANG ET AL: "Universal lossless data compression with side information by using a conditional MPM grammar transform", INTERNATIONAL SYMPOSIUM ON INFORMATION THEORY, 2000. PROCEEDINGS. IEEE 25-30 JUNE, 2000, PISCATAWAY, NJ, USA,IEEE, 25 June 2000 (2000-06-25), pages 298-298, XP010510174, ISBN: 978-0-7803-5857-7 * the whole document * | 1-14 | |
| A | US 2007/189626 A1 (TANIZAWA AKIYUKI [JP] ET AL) 16 August 2007 (2007-08-16) * the whole document * | 1-14 | |
| X,P | GERGELY KORODI ET AL: "QuYK", 96. MPEG MEETING; 21-3-2011 - 25-3-2011; GENEVA; (MOTION PICTURE EXPERT GROUP OR ISO/IEC JTC1/SC29/WG11),, no. m19982, 20 March 2011 (2011-03-20), XP030048549, * the whole document * | 1-14 | TECHNICAL FIELDS SEARCHED (IPC) |

The present search report has been drawn up for all claims

| Place of search | Date of completion of the search | Examiner |
|---|---|---|
| Munich | 24 May 2012 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 15 8956

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2012

| Patent document cited in search report | Publication date | Patent family member(s) | Publication date |
|---|---|---|---|
| US 2007189626 A1 | 16-08-2007 | AU 2006338425 A1 | 23-08-2007 |
| | | BR PI0621340 A2 | 06-12-2011 |
| | | CA 2642491 A1 | 23-08-2007 |
| | | CN 101401435 A | 01-04-2009 |
| | | EP 1986440 A1 | 29-10-2008 |
| | | KR 20080085909 A | 24-09-2008 |
| | | US 2007189626 A1 | 16-08-2007 |
| | | WO 2007094100 A1 | 23-08-2007 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61452078 A
- US 61452081 A